# EUROPÄISCHE PATENTSCHRIFT

(11) **EP 1 490 159 B1**
(45) Veröffentlichungstag und Bekanntmachung des Hinweises auf die Patenterteilung: **11.10.2006**
(21) Anmeldenummer: 02781189.2
(22) Anmeldetag: 26.09.2002
(51) Int. Cl.: B01D 46/52, B01D 29/07

(54) **KASSETTENFILTER**
CASSETTE FILTER
FILTRE A CASSETTE

(30) Priorität: 22.03.2002 DE 10213047
(43) Veröffentlichungstag der Anmeldung: 29.12.2004
(73) Patentinhaber: Carl Freudenberg KG, 69469 Weinheim (DE)
(72) Erfinder: TAPPER, Renate, 64625 Bensheim (DE); SCHROTH, Thomas, 67240 Bobenheim (DE); CAESAR, Thomas, 69181 Leimen (DE)
(86) Internationale Anmeldenummer: PCT/EP2002/010782
(87) Internationale Veröffentlichungsnummer: WO 2003/080222

(56) Entgegenhaltungen:
- WO-A-96/19279
- DE-A- 19 601 978
- DE-A- 19 734 081
- PATENT ABSTRACTS OF JAPAN vol. 018, no. 465 (M-1665), 30. August 1994 (1994-08-30) & JP 06 146733 A (FUMI TEC:KK), 27. Mai 1994 (1994-05-27)

## Beschreibung

### Technisches Gebiet

Die Erfindung befasst sich mit einem Kassettenfilter, der einen Rahmen und eine darin eingesetzte plissierte Filtermaterial sowie ein Schutzgitter mit Durchtrittsöffnungen hat, wobei das Schutzgitter in einem Abstand von der Filtermaterial in dem Rahmen festgehalten ist und einen Strömungswiderstand aufweist, der geringer ist, als derjenige des plissierten Filtermaterials.

### Stand der Technik

Durch die DE 195 45 064 A1 ist bereits ein Kassettenfilter bekannt geworden, der als Schwebstoff- und Feinfilter eingesetzt wird. Kassettenfilter dieser Art haben sich in der Praxis bewährt. Als Filtermedium werden plissierte Filtermatten eingesetzt, wie sie beispielsweise in der DE 195 45 046 C2 gezeigt sind.

Die bei den Kassettenfiltern verwendeten Filtermedien sind unterschiedlicher Bauart und Materialzusammensetzung. So werden beispielsweise für Filter mit höheren Filterklassen Glasfaserpapiere verwendet, die nur wenig widerstandsfähig gegen eine mechanische Belastung sind. Sie reißen leicht, was vor allem bei unsachgemäßem Behandeln zu einer Beschädigung des Filtermediums und damit zu einer Beeinträchtigung, gegebenenfalls zum Verlust der Filtereigenschaften, führt. Aus diesem Grunde werden bei einer Reihe von Anwendungsfällen die Filter vor und / oder hinter dem Filterpaket mit einem Schutzgitter versehen, welches das Filtermedium vor einer Berührung beziehungsweise einer Beschädigung schützt. Das Schutzgitter wird dabei mit dem Filterpaket in einem Rahmen verklebt beziehungsweise vergossen. Das auch als Griffschutz bezeichnete Schutzgitter muss über eine hohe Luftdurchlässigkeit bei gleichzeitig hoher Steifigkeit verfügen. Das zu verwendende Material ist entsprechend auszuwählen. Da die Filter in ihrer Bauhöhe zum Teil sehr eingeschränkt sind, darf das Material auch nicht zu dick sein. Darüber hinaus soll der Griffschutz plan ausgebildet sein. Um diese Bedingung zu erfüllen, werden zur Zeit Schutzgitter aus Streckmetall, Edelstahl oder Aluminium eingesetzt. Dieses Material erhöht jedoch das Gewicht der Filter erheblich. Darüber hinaus steht das Material einer Veraschbarkeit, das heißt einer Verbrennung entgegen. Eine Möglichkeit Veraschbarkeit zu erreichen, könnte darin bestehen, anstelle der metallenen Schutzgitter solche aus Kunststoff einzusetzen. In Versuchen zeigte sich jedoch, dass die Steifigkeit solcher Gitter, nicht ausreicht, um eine Beschädigung des Filtermediums sicher zu verhindern.

### Darstellung der Erfindung

Der Erfindung liegt deshalb die Aufgabe zugrunde, eine Möglichkeit zu schaffen, mit der das eingesetzte Filtermedium beziehungsweise die verwendete Filtermaterial mit größter Sicherheit vor einer Beschädigung geschützt wird. Darüber hinaus soll das hergestellte Produkt einfach in seinem Aufbau und seiner Montage sein, ein geringes Gewicht haben und mit geringen Kosten herstellbar sein.

Die Lösung der gestellten Aufgabe wird bei einem Kassettenfilter der eingangs genannten Art erfindungsgemäß dadurch erreicht, dass das Schutzgitter aus zumindest einem um die Durchtrittsöffnungen gebogenen Folienstreifen besteht, der sich parallel zur Anströmrichtung des zu filternden Mediums erstreckt und zumindest einen weiteren, identisch gebogenen Folienstreifen außerhalb der Durchtrittsöffnungen an Berührungsstellen wiederkehrend berührt und mit diesem an den Berührungsstellen verklebt ist. Aus den Folien wird ein wabenartiger Aufbau hergestellt, der ein Schutzgitter höchster Stabilität und Festigkeit bildet.

Die Folienstreifen können die Gestalt eines Folienringes von dreieckigem, viereckigem, sechseckigem oder rundem Zuschnitt haben. Möglich ist aber auch einen Wabenaufbau herzustellen, in dem Folienstreifen mit hin- und hergehenden Wellungen und / oder Abknickungen versehen, miteinander verbunden werden.

Es werden Folienstreifen eingesetzt, deren Dicke von max. 0,5 mm beträgt. Außerdem ist es günstig, das Schutzgitter so auszuführen, dass sein offener Flächenanteil mehr als 75 % der Anströmfläche bei einem maximalen Durchmesser der Durchtrittsöffnungen von 15 mm beträgt. Der Durchmesser der Durchtrittsöffnungen wird so gewählt, dass er zwischen 2 und 15 mm ausmacht. In der Regel haben die Durchtrittsöffnungen einer Wabe den gleichen Durchmesser.

Um das Gewicht der Kassettenfilter möglichst gering zu halten, wird für das Schutzgitter eine Stärke beziehungsweise Kernhöhe von 1 bis 10 mm gewählt.

Der wabenartige Aufbau der Schutzgitter erreicht bereits bei kleinsten Stärken eine hohe Steifigkeit und Festigkeit.

Eine einfache Möglichkeit ein Schutzgitter zu bilden, besteht darin, dass der Folienstreifen aus einer höher schmelzbaren Tragschicht und einer die Tragschicht einfassenden, bei vergleichsweise niedrigerer Temperatur zumindest einmal thermisch erweichbaren Haftschicht besteht und dass die Folienstreifen durch eine vorübergehende Erweichung und Verpressung im Bereich der Haftschicht miteinander zu dem Schutzgitter verklebt werden. Als Material für die Tragschicht kommt in erster Linie Kunststoff oder Papier zum Einsatz. Es kann aber auch Metall verwendet werden.

Als Filtermaterial kommt vorzugsweise eine plissierte Filtermatte zum Einsatz, die Scheitel aufweist, die mit Abstandshaltern verklebt sind. Diese Abstandshalter werden durch Leisten gebildet, die längs zur Richtung der Scheitel betrachtet, Abstände voneinander haben und die zugleich, als Unterstützung für das Schutzgitter selbst dienen können. Es ist günstig, dabei Leisten aus geschäumtem oder ungeschäumtem Kunststoff einzusetzen

Die Filtermatte selbst wird bevorzugt aus Vliesstoff gebildet. Möglich ist aber auch eine Filtermatte aus Papier, gegebenenfalls im Verbund mit Vliesstoff. Bei höheren Filterklassen ist es günstig, wenn der Vliesstoff Glas- und / oder Synthesefasern, Synthesefäden und / oder ein Bindemittel enthält.

Durch seine Ausgestaltung als Wabengitter kann das Schutzgitter auch als Strömungsgleichrichter oder Schalldämpfer für das zu reinigende Medium dienen.

### Ausführung der Erfindung

Anhand eines in der Zeichnung dargestellten Ausführungsbeispiels wird die Erfindung nachstehend näher erläutert.

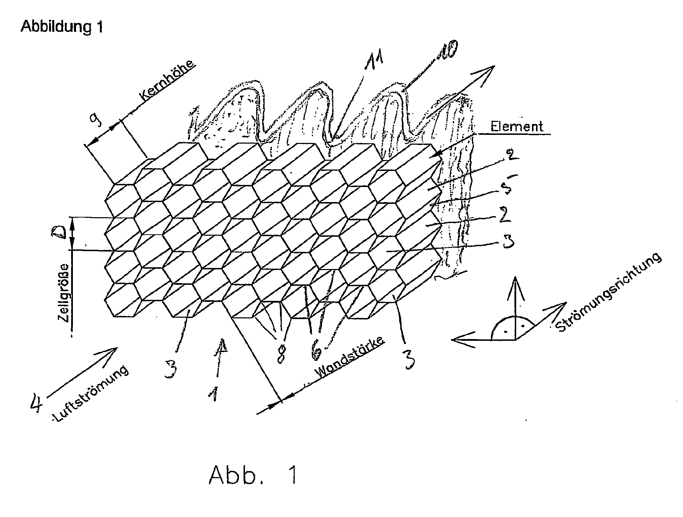

In der Fig. 1 ist vergrößert eine perspektivische Ansicht auf einen Ausschnitt eines Schutzgitters nach der Erfindung dargestellt. Im Zusammenhang mit der generellen Ausbildung eines Kassettenfilters mit einem Rahmen und einer darin eingesetzten plissierten Filtermatte und Schutzgitter wird auf die DE 195 45 064 A1 verwiesen. Das Schutzgitter 1 der vorliegenden Erfindung wird aus einzelnen Folienstreifen 2 und 5 hergestellt, die zwischen sich die Durchtrittsöffnungen 3 bilden. Die Folienstreifen 2 und 5 erstrecken parallel zur Anströmrichtung 4 des zu filternden Mediums. Mit dem Folienstreifen 2 wird ein identisch ausgebildeter Folienstreifen 5 verbunden. Bei einem entsprechenden Übereinanderlegen der Folienstreifen 2 und 5 entstehen die Berührungsstellen 6. An diesen Berührungsstellen 6 werden die Folienstreifen 2 und 5 miteinander verklebt. Im gewählten Beispiel entstehen Durchtrittsöffnungen 3 mit sechseckigem Zuschnitt. Ein solcher Aufbau der Waben wird durch Folienstreifen gebildet, die mit entsprechenden Abknickungen 8 versehen sind. Möglich ist aber auch, Folienstreifen in Wellenform entsprechend miteinander zu verbinden. Durch die gewählte Dicke der Folienstreifen 2 und 5, die unterhalb von 0,5 mm liegt und auch der gewählte Durchmesser der Durchtrittsöffnungen 3 wird ein offener Flächenanteil von mehr als 75 % der Anströmfläche erreicht. Die Kernhöhe 9 des Schutzsgitters 1 ist mit 8 mm gewählt.

Hinter dem Schutzgitter 1, in Strömungsrichtung gesehen, befindet sich die Filtermatte 10 mit den Scheiteln 11. Über diese Scheitel 11 können nicht näher gezeigte Abstandshalter in Form von Leisten gelegt werden, die zugleich das Schutzgitter 1 unterstützen. Die Filtermatte 10 besteht aus einem Vliesstoff mit eingefügten Glasfasern.

## Patentansprüche

1. Kassettenfilter, umfassend einen Rahmen und ein darin eingesetztes, plissiertes Filtermaterial sowie ein Schutzgitter mit Durchtrittsöffnungen, das in einem Abstand vom Filtermaterial in dem Rahmen festgehalten ist und das einen Strömungswiderstand aufweist, der geringer ist als derjenige des plissierten Filtermaterials, **dadurch gekennzeichnet, dass** das Schutzgitter (1) aus zumindest einem um die Durchtrittsöffnungen (3) gebogenen Folienstreifen (2) besteht, der sich parallel zur Anströmrichtung (4) des zu filternden Mediums erstreckt und zumindest einen weiteren, identisch gebogenen Folienstreifen (5) außerhalb der Durchtrittsöffnungen (3) an Berührungsstellen (6) wiederkehrend berührt und mit diesem an den Berührungsstellen (6) verklebt ist.

2. Kassettenfilter nach Anspruch 1, **dadurch gekennzeichnet, dass** der Folienstreifen (2, 5) die Gestalt eines Folienringes von dreieckigem, viereckigem, sechseckigem oder rundem Zuschnitt hat

3. Kassettenfilter nach Anspruch 1, **dadurch gekennzeichnet, dass** der Folienstreifen (2, 5) hin- und hergehende Wellungen und / oder Abknickungen (8) hat.

4. Kassettenfilter nach einem der Ansprüche 1 bis 3, **dadurch gekennzeichnet, dass** der Folienstreifen (2, 5) eine Dicke von max. 0,5 mm hat.

5. Kassettenfilter nach einem der Ansprüche 1 bis 4, **dadurch gekennzeichnet, dass** das Schutzgitter (1) einen offenen Flächenanteil von mehr als 75 % der Anströmfläche bei einem maximalen Durchmesser der Durchtrittsöffnungen (3) von 15 mm hat.

6. Kassettenfilter nach einem der Ansprüche 1 bis 5, **dadurch gekennzeichnet, dass** der Durchmesser (D) der Durchtrittsöffnungen (3) 2 bis 15 mm beträgt.

7. Kassettenfilter nach einem der Ansprüche 1 bis 6, **dadurch gekennzeichnet, dass** das Schutzgitter (1) eine Kernhöhe (9) von 1 bis 10 mm hat.

8. Kassettenfilter nach einem der Ansprüche 1 bis 7, **dadurch gekennzeichnet, dass** der Folienstreifen (2, 5) eine höher schmelzbare Tragschicht und eine die Tragschicht einfassende, bei vergleichsweise niedrigerer Temperatur zumindest einmal thermisch erweichbare Haftschicht aufweist und dass die Folienstreifen (2, 5) durch eine vorübergehende Erweichung und Verpressung im Bereich der Haftschicht miteinander zu dem Schutzgitter (1) verklebt sind.

9. Kassettenfilter nach einem der Ansprüche 1 bis 8, **dadurch gekennzeichnet, dass** zumindest die Tragschicht aus Metall, Kunststoff oder Papier besteht.

10. Kassettenfilter nach einem der Ansprüche 1 bis 9, **dadurch gekennzeichnet, dass** die plissierte Filtermatte (10) Scheitel (11) aufweist, die mit Abstandhaltern verklebt sind, dass die Abstandhalter durch Leisten gebildet sind, die längs zur Richtung der Scheitel betrachtet, Abstände voneinander haben und dass die Leisten zugleich das Schutzgitter (1) unterstützen.

11. Kassettenfilter nach einem der Ansprüche 1 bis 10, **dadurch gekennzeichnet, dass** die Leisten aus geschäumtem oder ungeschäumtem Kunststoff bestehen.

12. Kassettenfilter nach einem der Ansprüche 1 bis 11, **dadurch gekennzeichnet, dass** die Filtermatte (11) aus Papier und / oder Vliesstoff besteht.

13. Kassettenfilter nach einem der Ansprüche 1 bis 12, **dadurch gekennzeichnet, dass** der Vliesstoff Glas- und / oder Synthesefasern, Synthesefäden und / oder ein Bindemittel enthält.

14. Kassettenfilter nach einem der Ansprüche 1 bis 13, **dadurch gekennzeichnet, dass** das Schutzgitter (1) als Strömungsgleichrichter oder Schalldämpfer für das zu reinigende Medium gestaltet ist.

## Claims

1. Cassette filter, comprising a frame and a pleated filter material inserted therein, as well as a protective grid with passage holes which is secured in the frame at a distance from the filter material and has a flow resistance which is less than that of the pleated filter material, **characterized in that** the protective grid (1) consists of at least one foil strip (2) bent around the passage holes (3), which foil strip extends parallel to the approach-flow direction (4) of the medium to be filtered and recurrently touches at least one further, identically bent foil strip (5) outside the passage holes (3) at contact sites (6) and is glued thereto at the contact sites (6).

2. Cassette filter according to Claim 1, **characterized in that** the foil strip (2, 5) has the form of a foil ring of triangular, square, hexagonal or round cut.

3. Cassette filter according to Claim 1, **characterized in that** the foil strip (2, 5) has corrugations and/or kinks (8) which pass back and forth.

4. Cassette filter according to one of Claims 1 to 3, **characterized in that** the foil strip (2, 5) has a thickness of max. 0.5 mm.

5. Cassette filter according to one of Claims 1 to 4, **characterized in that** the protective grid (1) has an open areal component of more than 75% of the approach-flow area, with a maximum diameter of the passage holes (3) of 15 mm.

6. Cassette filter according to one of Claims 1 to 5, **characterized in that** the diameter (D) of the passage holes (3) measures 2 to 15 mm.

7. Cassette filter according to one of Claims 1 to 6, **characterized in that** the protective grid (1) has a core height (9) of 1 to 10 mm.

8. Cassette filter according to one of Claims 1 to 7, **characterized in that** the foil strip (2, 5) has a substrate of higher melting point and an adhesive layer which borders the substrate and, at comparatively lower temperature, can be thermally softened at least once, and **in that** the foil strips (2, 5) are glued together to form the protective grid (1) by a temporary softening and pressing in the region of the adhesive layer.

9. Cassette filter according to one of Claims 1 to 8, **characterized in that** at least the substrate consists of metal, plastic or paper.

10. Cassette filter according to one of Claims 1 to 9, **characterized in that** the pleated filter mat (10) has apexes (11) which are glued to spacers, **in that** the spacers are formed by bars which, viewed longitudinally to the direction of the apexes, are spaced apart and **in that** the bars at the same time support the protective grid (1).

11. Cassette filter according to one of Claims 1 to 10, **characterized in that** the bars consist of foamed or unfoamed plastic.

12. Cassette filter according to one of Claims 1 to 11, **characterized in that** the filter mat (11) consists of paper and/or non-woven fabric.

13. Cassette filter according to one of Claims 1 to 12, **characterized in that** the non-woven fabric contains glass and/or synthetic fibres, synthetic yarns and/or a binding agent.

14. Cassette filter according to one of Claims 1 to 13, **characterized in that** the protective grid (1) is designed as a flow straightener or sound absorber for the medium to be cleaned.

## Revendications

1. Filtre à cassette, comprenant un châssis et une matière de filtre plissée insérée dedans ainsi qu'une grille protectrice qui est pourvue d'orifices de passage et maintenue à distance de la matière de filtre dans le châssis et possède une résistance au flux qui est plus faible que celle de la matière de filtre plissée, **caractérisé en ce que** la grille protectrice (1) est composée d'au moins une bande de film (2) recourbée autour des orifices de passage (3) et s'étendant parallèlement au sens d'afflux (4) du fluide à filtrer et touche périodiquement au moins une autre bande de film (5) recourbée de manière identique en dehors des orifices de passage (3) à des points de contact (6) et est collée à celle-ci aux points de contact (6).

2. Filtre à cassette selon la revendication 1, **caractérisé en ce que** la bande de film (2, 5) a la forme d'un anneau de film de coupe triangulaire, quadrangulaire, hexagonale ou ronde.

3. Filtre à cassette selon la revendication 1, **caractérisé en ce que** la bande de film (2, 5) présente des ondulations et/ou des pliures en zigzag (8).

4. Filtre à cassette selon l'une quelconque des revendications 1 à 3, **caractérisé en ce que** la bande de film (2, 5) a une épaisseur de 0,5 mm au maximum.

5. Filtre à cassette selon l'une quelconque des revendications 1 à 4, **caractérisé en ce que** la grille protectrice (1) a une proportion de surface ouverte de plus de 75 % de la surface d'afflux avec un diamètre maximal des orifices de passage (3) de 15 mm.

6. Filtre à cassette selon l'une quelconque des revendications 1 à 5, **caractérisé en ce que** le diamètre (D) des orifices de passage (3) est de 2 à 15 mm.

7. Filtre à cassette selon l'une quelconque des revendications 1 à 6, **caractérisé en ce que** la grille protectrice (1) a une hauteur de noyau (9) de 1 à 10 mm.

8. Filtre à cassette selon l'une quelconque des revendications 1 à 7, **caractérisé en ce que** la bande de film (2, 5) comporte une couche support à plus haut niveau de fusion et une couche d'adhérence englobant la couche support et pouvant être ramollie au moins une fois thermiquement à température relativement plus faible et que les bandes de film (2, 5) sont collées ensemble par ramollissement temporaire et compression au niveau de la couche d'adhérence sur la grille protectrice (1).

9. Filtre à cassette selon l'une quelconque des revendications 1 à 8, **caractérisé en ce que** la couche support est composée de métal, de matière plastique ou de papier.

10. Filtre à cassette selon l'une quelconque des revendications 1 à 9, **caractérisé en ce que** la nappe de filtre plissée (10) comporte des sommets (11), que les écarteurs sont constitués par des tringles qui, vues longitudinalement par rapport au sens des sommets, sont espacées les unes des autres et que les tringles soutiennent en même temps la grille protectrice (1).

11. Filtre à cassette selon l'une quelconque des revendications 1 à 10, **caractérisé en ce que** les tringles sont composées de matière plastique fabriquée ou non par moussage.

12. Filtre à cassette selon l'une quelconque des revendications 1 à 11, **caractérisé en ce que** la nappe de filtre (11) est composée de papier et/ou de matière non-tissée.

13. Filtre à cassette selon l'une quelconque des revendications 1 à 12, **caractérisé en ce que** la matière non-tissée contient des fibres de verre et/ou de synthèse, des fils de synthèse et/ou un liant.

14. Filtre à cassette selon l'une quelconque des revendications 1 à 13, **caractérisé en ce que** la grille protectrice (1) est réalisée sous forme d'un redresseur de flux ou d'un amortisseur sonore pour le fluide à nettoyer.
